# EUROPÄISCHE PATENTSCHRIFT

(11) **EP 2 681 785 B1**
(45) Veröffentlichungstag und Bekanntmachung des Hinweises auf die Patenterteilung: **01.04.2015**
(21) Anmeldenummer: 12706473.1
(22) Anmeldetag: 24.02.2012
(51) Int. Cl.: H01M 4/04, H01M 4/88, B01F 5/10, B01F 13/10, B01F 3/12, B01F 7/00

(54) **VERFAHREN UND VORRICHTUNG ZUM HERSTELLEN EINER MISCHUNG ZUM BESCHICHTEN VON BATTERIE-ELEKTRODEN**
METHOD AND DEVICE FOR PRODUCING A MIXTURE FOR COATING BATTERY ELECTRODES
PROCÉDÉ ET DISPOSITIF DE PRODUCTION D'UN MÉLANGE POUR RECOUVRIR DES ÉLECTRODES DE BATTERIE

(30) Priorität: 01.03.2011 DE 102011012771
(43) Veröffentlichungstag der Anmeldung: 08.01.2014
(73) Patentinhaber: IKA - Werke GmbH & Co. KG, 79219 Staufen (DE)
(72) Erfinder: BÜRGELIN, Ralf, 79379 Müllheim (DE)
(74) Vertreter: Maucher Börjes Jenkins Patent- und Rechtsanwälte
(86) Internationale Anmeldenummer: PCT/EP2012/000812
(87) Internationale Veröffentlichungsnummer: WO 2012/116799

(56) Entgegenhaltungen:
- EP-A1- 1 980 326
- WO-A1-2010/018771
- WO-A2-2006/047588
- DE-A1- 19 629 945
- DE-A1-102007 063 331
- US-A- 4 976 904
- US-A1- 2003 227 818
- US-A1- 2007 256 599
- US-A1- 2007 293 589
- US-B1- 6 217 812

## Beschreibung

Die Erfindung betrifft ein Verfahren zum Herstellen einer Mischung, mit welcher Elektroden von Batterien oder Akkumulatoren oder von Brennstoffzellen beschichtet werden, wobei leitendes Material, aktives Material und wenigstens ein Binder als feste Bestandteile in Pulver- oder Granulatform und Flüssigkeit miteinander vermischt werden.

Die Erfindung betrifft ferner eine Vorrichtung zum Herstellen einer Mischung zum Beschichten von Elektroden von Batterien oder Akkumulatoren oder von Brennstoffzellen, bestehend aus leitendem Material, Aktivmaterial und Binder als festen Bestandteilen und aus Flüssigkeit mit einer Mischeinrichtung zum Vermischen von festen Bestandteilen miteinander und mit Flüssigkeit.

Aus der WO 2006/047588 A2 und der US 2007/256599 A1 sind ein Verfahren und eine Vorrichtung mit Merkmalen aus dem Oberbegriff der Ansprüche 1 bzw. 12 bekannt.

Aus der JP 11 283 616 A oder aus der US 2006/0210877 A1 sind vergleichbare Verfahren und Vorrichtungen bekannt, wobei vorgesehen ist, dass die jeweiligen Mischungen chargenweise hergestellt werden, selbst wenn die einzelnen Mischbehälter mit den erforderlichen Bestandteilen bis zu einer bestimmten Gesamtmenge kontinuierlich befüllt werden.

Aus JP 11 283 616 A ist bekannt, in einem einzigen Dispersionsgefäß eine Lösung von einer Binderkomponente für eine Elektrode und ein Lösungsmittel unter Vakuum zu halten, wonach aktives Material für die Elektrode zwar kontinuierlich eingefüllt wird, die dann erzeugte Mischung aber nur diesen Behälterinhalt umfasst, d.h. es wird eine entsprechende Charge gemäß der tergröße gemischt.

Derartige chargenweise durchgeführte Mischverfahren lassen jedoch nur die Herstellung relativ kleiner Mengen zu, d.h. sie sind nicht geeignet, die zunehmenden Mengen solcher Beschichtungsmassen rationell, effektiv und somit,kostengünstig herzustellen.

Es besteht deshalb die Aufgabe ein Verfahren und auch eine Vorrichtung der eingangs genannten Art zu schaffen, womit die genannten Beschichtungsmassen in großen Mengen kostehgünstig hergestellt werden können.

Zur Lösung dieser scheinbar widersprüchlichen Aufgabe ist das eingangs definierte Verfahren dadurch gekennzeichnet, dass zunächst der Binder mit der Flüssigkeit kontinuierlich vermischt und in der Flüssigkeit gelöst wird und dass die so kontinuierlich entstehende Lösung und Mischung kontinuierlich weiterbefördert und in ihr die weiteren Bestandteile der herzustellenden Mischung in in Förderrichtung folgenden Mischvorrichtungen jeweils kontinuierlich zugemischt werden, wobei die mehreren Verfahrensschritte kombiniert werden, so dass das gesamte Mischverfahren kontinuierlich abläuft. Das bedeutet, dass zunächst der Binder mit der Flüssigkeit kontinuierlich vermischt und darin gelöst wird und dass die so gebildete Lösung insbesondere kontinuierlich weiterbefördert und ihr die weiteren Bestandteile der herauszustellenden Mischung jeweils kontinuierlich zugemischt werden. Es wird also nicht die gesamte Flüssigkeit mit sämtlichen Mischungsbestandteilen gleichzeitig versetzt und chargenweise vermischt, sondern die Erfindung nutzt die Möglichkeit, kontinuierlich zunächst einen Teil oder den gesamten Binder mit der Flüssigkeit zu vermischen und danach die weiteren Bestandteile wiederum kontinuierlich hinzuzufügen, so dass in einem andauernden kontinuierlich Misch- und Förderprozess praktisch beliebige Mengen der Mischung entsprechend preiswert hergestellt werden können.

Besonders günstig ist es dabei, wenn der den gelösten Binder enthaltenden Flüssigkeit kontinuierlich das leitende Material und/oder das aktive Material zugemischt werden. Dadurch kann erreicht werden, dass insbesondere das empfindliche aktive Material nicht durch Mehrfachmischung geschädigt wird.

Dabei ist es vorteilhaft, wenn das leitende Material und das - empfindliche - aktive Material der den Binder enthaltenden Flüssigkeitslösung nacheinander zugemischt werden, wobei zweckmäßigerweise das aktive Material zuletzt hinzugemischt wird.

Es ist aber auch möglich, dass das aktive Material und das leitende Material zusammengeführt und gemeinsam mit der den Binder enthaltenden Lösung vermischt werden.

In all diesen Fällen ergibt sich die Möglichkeit eines kontinuierlichen Verfahrens und dabei einer schonenden Behandlung insbesondere des aktiven Materials.

Eine besonders günstige Ausführungsform des erfindungsgemäßen Verfahrens kann vorsehen, dass die für die Mischung erforderliche Flüssigkeit in wenigstens zwei Flüssigkeitsanteile aufgeteilt und der eine Flüssigkeitsanteil kontinuierlich mit dem Binder vermischt und dieser darin gelöst wird und dass der wenigstens zweite Flüssigkeitsanteil kontinuierlich mit leitendem Material und/oder mit aktivem Material kontinuierlich vermischt wird und dass die so gebildeten Teilmischungen kontinuierlich miteinander vermischt werden.

In zweckmäßiger Weise kann also die zur Gesamtmischung gehörende Flüssigkeit aufgeteilt werden, so dass jedem Flüssigkeitsanteil zunächst nur ein oder gegebenenfalls zwei Bestandteile der Gesamtmischung zugemischt werden können, was ein einfacher Mischprozess ist, als wenn alle Bestandteile gleichzeitig mit Flüssigkeit vermischt werden müssten. Die dadurch entstandenen Mischungs-Zwischenprodukte können dann endgültig miteinander vermischt werden, wobei gegebenenfalls weitere Bestandteile hinzugefügt werden können, wobei dies alles kontinuierlich erfolgt, also zunächst an unterschiedlichen Stellen kontinuierlich hergestellte Teilmischungen kontinuierlich zusammengeführt und weiter vermischt werden können.

Eine ganz besonders zweckmäßige und vorteilhafte Ausgestaltung der Erfindung, mit welcher entsprechend gute Ergebnisse der Vermischung der einzelnen Bestandteile erreicht werden können, kann darin bestehen, dass wenigstens eine oder mehrere oder alle einzelnen Mischungen nach deren Erzeugung oder Vermischung dispergiert werden. Dadurch kann die Mischung oder können die Mischungen aus Flüssigkeit und Feststoff noch intensiver vermischt werden.

Beispielsweise kann an wenigstens einer Stelle, an welcher ein kontinuierlicher Mischvorgang stattfindet, zweckmäßigerweise überall dort, wo kontinuierlich gemischt werden soll, eine Vorrichtung gemäß DE 196 29 945 C5 mit den darin geschilderten Vorteilen eingesetzt werden.

Eine weitere Ausgestaltung der Erfindung für die Intensivierung der Durchmischung der einzelnen Bestandteile kann vorsehen, dass nach dem Vermischen und/oder Dispergieren der den Binder enthaltenden Flüssigkeit mit dem aktiven Material und/oder mit dem leitenden Material die Gesamtmischung dispergiert wird. Somit entsteht eine Mischung, die auf kontinuierlichem Wege gewonnen wird, aber dennoch eine innige und intensive Vermischung aller Bestandteile miteinander aufweist.

Eine konkrete Ausführungsform des erfindungsgemäßen Verfahrens kann vorsehen, dass die für die Gesamtmischung benötigte Flüssigkeit in - nur - zwei Flüssigkeitsanteile aufgeteilt und die Vermischung der Flüssigkeitsanteile mit jeweils wenigstens einem festen Mischungsbestandteil gleichzeitig in separaten Mischvorrichtungen - kontinuierlich - durchgeführt wird und dass die so gebildeten Teilmischungen kontinuierlich einer kontinuierlich arbeitenden Mischvorrichtung zugeführt und mit wenigstens einem weiteren festen Mischungsbestandteil, insbesondere mit dem Aktivmaterial, vermischt werden. Auf diese Weise kann Zeit dadurch gewonnen werden, dass zwei Teilmischungen praktisch gleichzeitig kontinuierlich entstehen, während das empfindliche Aktivmaterial erst zuletzt hinzugefügt wird.

Die wenigstens zwei Teilmischungen können dabei zunächst in einer kontinuierlich arbeitenden Mischvorrichtung miteinander vermischt und diese Vormischung einer weiteren kontinuierlich arbeitenden Mischvorrichtung zugeführt werden, in der ein weiterer fester Mischungsbestandteil, insbesondere das Aktivmaterial, hinzugemischt wird.

Somit ergibt sich ein erfindungsgemäßes Verfahren, welches aufgrund der verschiedenen kontinuierlich beschickbaren und betreibbaren Misch- und/oder Dispergiervorrichtungen insbesondere kontinuierlich ablaufen kann, so dass praktisch beliebig große Mengen der herzustellenden Mischung zum Beschichten von Elektroden erzeugt werden können.

Erfindungsgemäß sieht das Verfahrens für eine möglichst intensive Vermischung vor, dass nach wenigstens einem oder mehreren oder jedem kontinuierlichen Misch- und/oder Dispergiervorgang in einer Misch- und/oder Dispergiervorrichtung die Teilmischungen und/oder die Vormischung in wenigstens einen Zwischenspeicher- oder Pufferbehälter eingefüllt und von diesem erneut in die Misch- und/oder Dispergiervorrichtung oder in die nächste Mischvorrichtung überführt wird.

Das erfindungsgemäße Verfahren erlaubt also in einer oder mehreren oder allen einzelnen Verfahrensstufen auch eine Rezirkulation zur Intensivierung des jeweiligen Mischergebnisses einer jeweiligen derartigen Verfahrensstufe. Dabei kann die Zwischenspeicherung oder Pufferung dazu beitragen, eine entsprechende Teilmischung abzuzweigen und wieder zu der entsprechenden Misch- und/oder Dispergiervorrichtung zurückzuführen.

Die alle Mischungsbestandteile vermischt umfassende Gesamtmischung kann nach der letzten gemeinsamen Vermischung in einem weiteren Verfahrensschritt zusätzlich dispergiert und dazu einer insbesondere separaten Dispergiervorrichtung zugeführt werden. Somit ergibt sich eine entsprechende zusätzliche Intensivierung der Vermischung aller Mischungsbestandteile.

Zwischen der letzten Mischvorrichtung für die Vermischung aller Bestandteile zu einer Gesamtmischung und einer separaten Dispergiervorrichtung oder in Förderrichtung hinter der letzten Misch- und/oder Dispergiervorrichtung kann die Gesamtmischung von einer Entgasungsstufe entgast und/oder entlüftet, insbesondere von überlagertem Stickstoff befreit werden.

Vor allem bei Kombination einzelner oder mehrerer der vorbeschriebenen Verfahrensmöglichkeiten und -schritten ergibt sich kontinuierlich eine Mischung zum Beschichten von Elektroden hoher Homogenität, die aufgrund der kontinuierlichen Herstellung in nahezu beliebigen Mengen mit dieser Qualität preiswert erzeugt werden kann.

Die eingangs erwähnte Vorrichtung zur Durchführung des Verfahrens ist zur Lösung der Aufgabe dadurch gekennzeichnet, dass die Mischeinrichtung wenigstens zwei Mischvorrichtungen zum Vermischen von pulvrigen und/oder körnigen Partikeln mit einer Flüssigkeit umfasst, welche Mischvorrichtungen jeweils einen Zuführschacht für die festen Bestandteile oder Feststoffe und wenigstens ein um eine vertikale Achse rotierendes Mischwerkzeug sowie eine Flüssigkeitszufuhr und koaxial zu dem Mischwerkzeug oder in Förderrichtung hinter der Mischvorrichtung eine Dispergiervorrichtung aufweist und dass der Auslass wenigstens einer Dispergiervorrichtung mit einer weiteren Misch- und/oder Dispergiervorrichtung verbunden ist/sind, so dass die in einzelnen Misch- und/oder Dispergiervorrichtungen kontinuierlich erstellten Teilmischungen kontinuierlich miteinander und/oder mit einem weiteren Feststoff vermischbar sind.

In zweckmäßiger Weise kann dabei die Vorrichtung mehrere Mischvorrichtungen gemäß DE 196 29 945 C5 vorsehen, die in geeigneter Weise einerseits parallel zueinander und/oder andererseits in Förderrichtung hintereinander angeordnet sein können, um auf diese Weise eine hohe Homogenität und Intensität der erzeugten Mischung zu erreichen.

Eine günstige Ausführungsform der erfindungsgemäßen Vorrichtung kann dabei vorsehen, dass die wenigstens zwei Misch- und/oder Dispergiervorrichtungen hintereinander oder die erste und die zweite Misch- und/oder Dispergiervorrichtung parallel zueinander angeordnet sind und dass die Auslässe der Misch- und/oder Dispergiervorrichtungen mit dem Einlass einer in Förderrichtung folgenden weiteren Misch- und/oder Dispergiervorrichtung verbunden sind. Somit können Teilmischungen zusammengeführt und wiederum intensiv miteinander vermischt werden, wobei in vorteilhafter Weise ein kontinuierlicher Ablauf in Förderrichtung möglich ist.

Eine weitere Ausgestaltung der die erfindungsgemäße Vorrichtung im Wesentlichen bildenden Mischeinrichtung mit mehreren Misch- und/oder Dispergiervorrichtungen besteht darin, dass hinter dem Auslass wenigstens einer oder aller Dispergiervorrichtungen jeweils ein Puffer- oder Zwischenspeicherbehälter, insbesondere mit einem darin angeordneten Rühr- oder Mischwerkzeug, angeordnet ist, dessen Auslass mit dem Einlass einer nachfolgenden Mischvorrichtung verbunden sein kann. Dies ermöglicht es, die kontinuierlich hergestellten Teilmischungen entsprechend kontinuierlich weiterzubefördern und einer weiteren Vermischung wiederum kontinuierlich zu unterziehen, um die gewünschte Intensität der Durchmischung zu erreichen, aber praktisch beliebige Mengen herstellen zu können.

Die nach einem Puffer- oder Zwischenspeicherbehälter weiterführende Leitung für die Teilmischung weist erfindungsgemäß eine Abzweigung und eine Rückführleitung vor die Misch- und/oder Dispergiervorrichtung zum Zurückführen der dispergierten Mischung wieder vor oder in dieselbe Misch- und/oder Dispergiervorrichtung auf. Auf diese Weise kann eine Mischung oder Teilmischung einer zeitweiligen Rezirkulation unterzogen und damit noch intensiver bearbeitet werden. Für einen solchen Rezirkulationsschritt kann die kontinuierlich arbeitende erfindungsgemäße Mischeinrichtung dann zeitweise auch stufenweise und dann wieder kontinuierlich betrieben werden.

Eine konkrete Ausführungsform der Vorrichtung kann vorsehen, dass mit den Auslässen der wenigstens zwei Dispergiervorrichtungen zur Bildung von Teilmischungen jeweils wenigstens ein Puffer- oder Zwischenspeicherbehälter verbunden ist, dessen Auslass oder deren Auslässe mit dem Einlass wenigstens einer dritten Misch- und/oder Dispergiervorrichtung verbunden sind. Somit kommen jeweils schon intensiv vermischte Teilmischungen ihrerseits in eine dritte Misch- und/oder Dispergiervorrichtung, worin sie auch miteinander entsprechend intensiv vermischt beziehungsweise dispergiert werden können.

Die dritte Misch- und/oder Dispergiervorrichtung kann nur eine Zuführung für die mehreren Vormischungen und eine Abführung für die daraus gebildete Zwischenmischung und/oder eine weitere Zuführung für weitere feste Bestandteile aufweisen. Es ist also möglich, mit einer dritten Misch- und/oder Dispergiervorrichtung zunächst zwei Teilmischungen und aber gleichzeitig auch einen weiteren Feststoff miteinander zu vermischen.

Mit dem Auslass der wenigstens dritten Misch- und/oder Dispergiervorrichtung kann der Einlass einer separaten Dispergiervorrichtung verbunden sein. Somit kann die aus der dritten Misch- und/oder Dispergiervorrichtung kommende Mischung noch einmal zusätzlich dispergiert und damit die Homogenität der Mischung verbessert werden. Dabei ist vorteilhaft, dass dies in kontinuierlicher Arbeitsweise erfolgt, während die zusätzlich oder stattdessen mögliche Rezirkulation eine nur kurze Unterbrechung der kontinuierlichen Arbeitsweise bedeuten kann.

Auf dem Förderweg zwischen dem Auslass der dritten Misch- und/oder Dispergiervorrichtung und der separaten weiteren Dispergiervorrichtung kann eine Entgasungsvorrichtung angeordnet sein, da während der verschiedenen Verfahrensschritte Luft eingetragen oder feste Mischungsbestandteile mit Stickstoff überlagert sein können, so dass diese Gase wieder entfernt werden können.

Hinter der dritten Misch- und/oder Dispergiervorrichtung kann ein Puffer- oder Speicherbehälter angeordnet sein, durch den die schon erwähnte mögliche Rezirkulation begünstigt ist und insgesamt auch das kontinuierliche Verfahren auf gegebenenfalls etwas unterschiedliche Zuführ-Mengen oder -geschwindigkeiten reagieren kann.

Der Puffer- oder Speicherbehälter hinter der dritten Misch- und/oder Dispergiervorrichtung kann dabei vor der separaten-insbesondere letzten - Dispergiervorrichtung angeordnet sein.

Um die kontinuierlich anfallende Mischung, mit welcher Elektroden von Batterien oder Akkumulatoren oder von Brennstoffzellen beschichtet werden können, nicht unbedingt kontinuierlich abnehmen zu müssen, können in Förderrichtung am Ende der Mischeinrichtung wenigstens ein oder zwei insbesondere parallel zueinander angeordnete Puffer- oder Speicherbehälter vorgesehen sein. Es ist also möglich, die Mischung nach ihrer Fertigstellung zu speichern, also die Mischung kontinuierlich herzustellen, auch wenn sie nicht sofort abgenommen werden kann, bis der oder die Puffer- oder Speicherbehälter gefüllt sind. In diesem können, wie für diese Puffer- oder Speicherbehälter bereits erwähnt, Rühr- oder Mischwerkzeuge enthalten sein, so dass die hergestellte Mischung bedarfsweise aus einem oder beiden Speicherbehältern entnommen werden kann.

Insgesamt ergibt sich bei Kombination einzelner oder mehrerer der vorbeschriebenen Merkmale und Maßnahmen eine Vorrichtung, mit welcher eine Mischung zum Beschichten von Elektroden von Batterien oder Akkumulatoren oder Brennstoffzellen kontinuierlich und mit großer Homogenität hergestellt werden kann, so dass große Mengen dieser Mischung vergleichsweise preiswert erzeugt werden können.

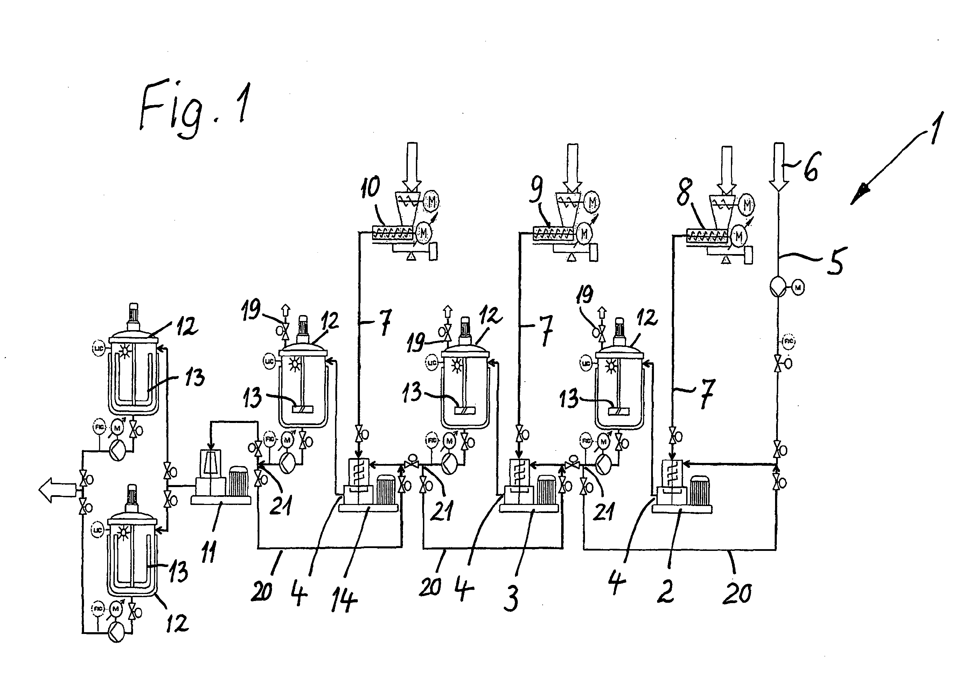

Nachstehend sind Ausführungsbeispiele der Erfindung anhand der Zeichnung näher beschrieben. Es zeigt in stark schematisierter Darstellung jeweils in Form eines Ablaufplanes
- Fig. 1: eine Mischeinrichtung, bei welcher an einem ersten Einlass eine Flüssigkeit als Lösungsmittel zu einer ersten Misch- und Dispergiervorrichtung und ein Binder über eine Dosiereinrichtung zu derselben ersten Misch- und Dispergiervorrichtung gelangen und in Förderrichtung dahinter zwei weitere Misch- und Dispergiervorrichtungen jeweils zur Zufuhr von leitendem Material und von aktivem Material angeordnet sind, hinter denen noch eine weitere Dispergiervorrichtung angeordnet ist,

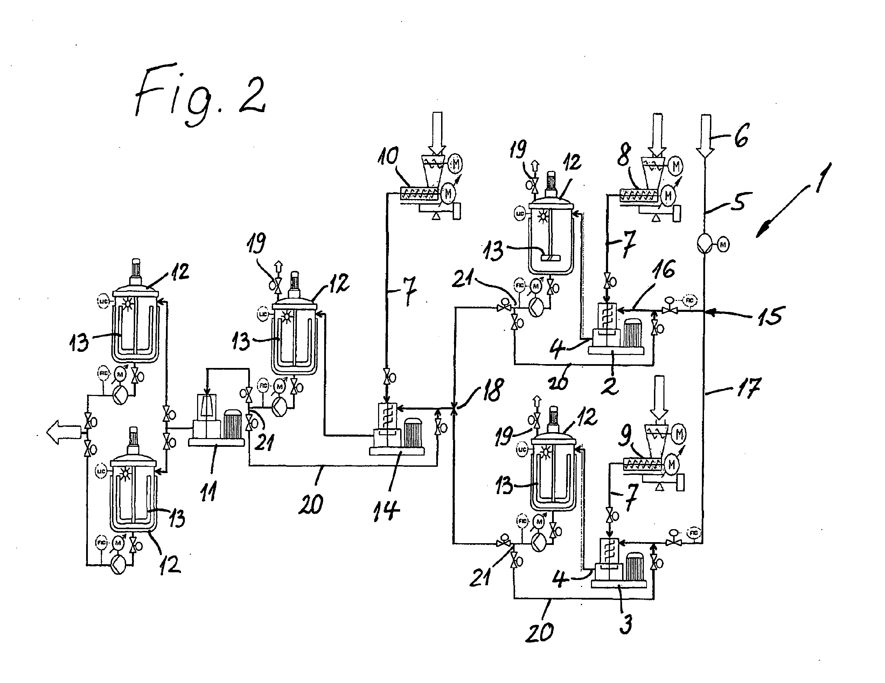

- Fig. 2: einen ersten Einlass für Flüssigkeit, dessen anschließende Leitung eine Abzweigung aufweist, so dass die Flüssigkeit zu zwei parallel zueinander angeordneten Misch- und Dispergiervorrichtungen gelangt, deren eine mit einer Dosiervorrichtung für den Binder und deren andere mit einer Dosiervorrichtung für leitendes Material verbunden ist, wobei die Auslässe der beiden Misch- und Dispergiervorrichtungen - über Puffer- oder Zwischenspeicherbehälter - zu einer dritten Misch- und Dispergiervorrichtung führen, die einen Einlass für das aktive Material hat, wobei wiederum dahinter noch eine letzte Dispergiervorrichtung und Puffer- oder Speicherbehälter angeordnet sind, sowie

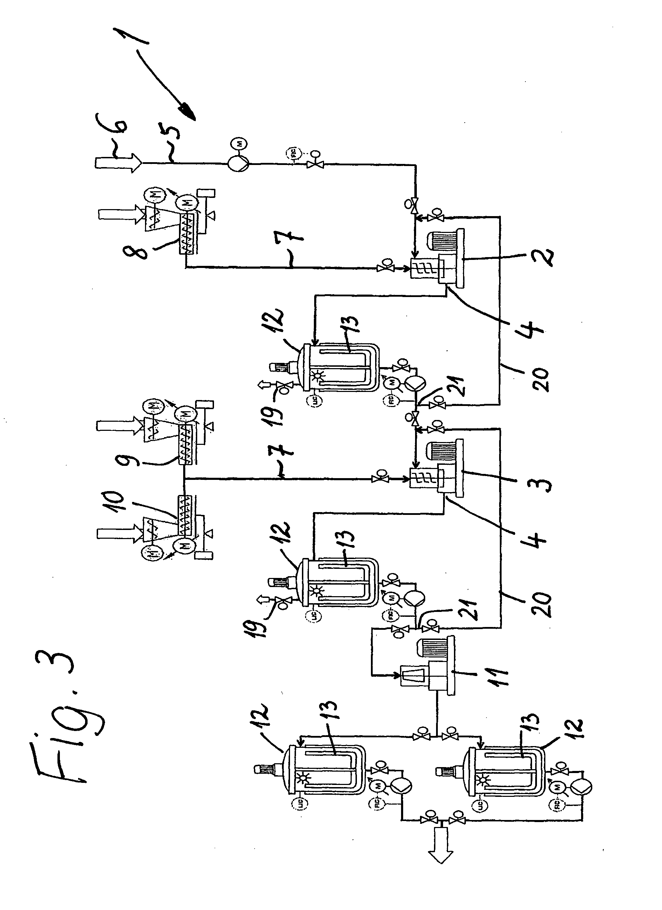

- Fig. 3: eine hinsichtlich der Zufuhr der Flüssigkeit und des Binders Fig. 1 entsprechende Anordnung, wobei in Förderrichtung hinter der ersten Misch- oder Dispergiervorrichtung eine zweite derartige Misch- und Dispergiervorrichtung angeordnet ist, der gleichzeitig aktives und leitendes Material über eine gemeinsame Leitung zuführbar sind, wobei in Förderrichtung dahinter eine letzte Dispergiervorrichtung sowie Puffer- oder Speicherbehälter angeordnet sind.

In der nachfolgenden Beschreibung verschiedener Ausführungsbeispiele erhalten hinsichtlich ihrer Funktion ähnliche oder übereinstimmende Teile oder Aggregate auch bei unterschiedlicher Anordnung und/oder Zuordnung übereinstimmende Bezugszahlen.

Eine im Ganzen mit 1 bezeichnete Vorrichtung dient in allen drei Ausführungsbeispielen zum Herstellen einer Mischung zum Beschichten von Elektroden von Batterien oder Akkumulatoren oder Brennstoffzellen, wobei die fertige Mischung aus einem Binder, leitendem Material und Aktivmaterial besteht und diese Bestandteile mit Hilfe von Flüssigkeit intensiv und möglichst homogen vermischt werden sollen.

Dabei sieht die Vorrichtung 1 eine aus mehreren Mischvorrichtungen und/oder Dispergiervorrichtungen zusammengesetzte Mischeinrichtung vor, wobei die erwähnten Misch- und Dispergiervorrichtungen in den verschiedenen Ausführungsbeispielen unterschiedlich angeordnet und auch einander in unterschiedlicher Form, wie nachstehend beschrieben, zugeordnet sein können.

Fig. 3 zeigt dabei eine Ausführungsform, bei welcher die vorstehend umschriebene Mischeinrichtung zwei Misch- und/oder Dispergiervorrichtungen, nämlich eine nachstehend noch weiter erläuterte erste derartige Misch- und Dispergiervorrichtung 2 sowie eine zweite Misch- und Dispergiervorrichtung 3 aufweist, um alle erwähnten Bestandteile miteinander vermischen zu können. Dabei könnte zunächst eine Mischvorrichtung und in Förderrichtung dahinter eine Dispergiervorrichtung die Misch- und Dispergiervorrichtungen 2 und 3 bilden, jedoch ist in allen Ausführungsbeispielen für alle dargestellten Misch- und Dispergiervorrichtungen besonders zweckmäßig eine Mischvorrichtung gemäß DE 196 29 945 C2, bei welcher ein Mischraum und koaxial zu diesem eine Dispergiereinrichtung kombiniert sind. Somit ist bei all diesen Misch- und Dispergiervorrichtungen jeweils ein in den Figuren nicht näher dargestellter Zuführschacht für die festen Bestandteile oder Feststoffe und wenigstens ein um eine vertikale Achse rotierendes Mischwerkzeug sowie eine Flüssigkeitszufuhr und koaxial zu dem Mischwerkzeug oder in Förderrichtung hinter der Mischvorrichtung eine Dispergiervorrichtung angeordnet.

Dabei erkennt man in Fig. 3 und auch in weiteren Figuren, dass der Auslass 4 der ersten Misch- und Dispergiervorrichtung 2 mit der weiteren, gemäß Fig. 3 mit der zweiten Misch- und Dispergiervorrichtung 3 verbunden ist, so dass die in den einzelnen Misch- und/oder Dispergiervorrichtungen erstellten Teilmischungen miteinander und/oder mit wenigstens einem weiteren Feststoff vermischbar sind.

In Fig. 3 erkennt man eine Flüssigkeitszufuhr 5 in Form einer Leitung mit einem Einlass 6, wodurch die zum Lösen der Bestandteile dienende Flüssigkeit der ersten Misch- und Dispergiervorrichtung 2 zugeführt werden kann. Gleichzeitig wird über einen weiteren Zulauf 7 ein fester Bestandteil, nämlich der Binder über eine Dosiervorrichtung 8 zugeführt und in die erste Mischund Dosiervorrichtung geleitet, wo also ein erster Mischungsvorgang kontinuierlich durchgeführt wird und die dabei entstehende Mischung dann über den Auslass 4 zu der zweiten Mischund Dispergiervorrichtung 3 gelangt.

Diese zweite Misch- und Dispergiervorrichtung 3 weist ebenfalls einen Zulauf 7 für feste Bestandteile auf, nämlich für das über eine Dosiervorrichtung 9 zugeführte aktive Material und das über eine Dosiervorrichtung 10 demselben Zulauf 7 zugeleitete leitende Material. Es werden also die festen Bestandteile Aktivmaterial und leitendes Material zusammengebracht und gemeinsam der zweiten Misch- und Dispergiervorrichtung 3 zugeführt, wo sie mit dem Mischungsergebnis der ersten Misch- und Dispergiervorrichtung 2 wiederum intensiv vermischt werden.

Damit ist praktisch schon eine derartige Mischung zum Beschichten von Elektroden fertiggestellt, jedoch erkennt man in Fig. 3 in Förderrichtung hinter der zweiten Misch- und Dispergiervorrichtung 3 noch eine letzte Dispergiervorrichtung 11, womit die Homogenität und die Intensität der Vermischung verbessert werden kann.

Ferner erkennt man hinter jeder Misch- und Dispergiervorrichtung einen Puffer- oder Zwischenbehälter 12, wodurch in den einzelnen Verfahrensstufen und Vorrichtungsabschnitten auftretende Ungenauigkeiten ausgeglichen werden können. In diesen Puffer- oder Zwischenspeicherbehältern 12 ist jeweils ein Rührwerkzeug 13 angeordnet, um den Mischungszustand aufrecht zu erhalten.

Schließlich ist auch in Fortsetzung hinter der letzten Dispergiervorrichtung noch eine Speicherung mit Hilfe von zwei parallelen derartigen Behältern 12 vorgesehen, um eine gewisse Vorratsmenge fertigen zu können, auch wenn die kontinuierlich entstehende Mischung nicht sofort oder nicht vollständig abgezogen wird.

Im Ausführungsbeispiel gemäß Fig. 1 ist wiederum ein Einlass 6 zu der Flüssigkeitszufuhr 5 vorgesehen, die zu der ersten Misch- und Dispergiervorrichtung 2 gelangt, in welche der Binder über die Dosiervorrichtung 8 und den Zulauf 7 transportiert wird. Über einen Puffer- oder Zwischenspeicherbehälter 12 führt der Förderweg mit entsprechenden Förderleitungen, Ventilen, Pumpen und dergleichen Aggregate wie beim Ausführungsbeispiel nach Fig. 3 zu einer zweiten Misch- und Dispergiervorrichtung 3, deren Zulauf 7 aber nur mit einer Dosiervorrichtung 9 für das leitende Material verbunden ist. Von dem Auslass 4 der zweiten Misch- und Dispergiervorrichtung 3 gelangt die so erstellte Mischung, der noch das aktive Material fehlt, wiederum über einen Pufferbehälter 12 zu einer dritten Misch- und Dispergiervorrichtung 14, deren Zulauf 7 mit der Dosier- und Fördervorrichtung 10 für das aktive Material verbunden ist, welches also erst dann der Mischung hinzugefügt wird, wenn diese bereits die Flüssigkeit, den Binder und das leitende Material umfasst. Entsprechend schonend ist das Einmischen dieses aktiven Materials.

In Förderrichtung hinter dieser dritten Misch- und Dispergiervorrichtung 14 gelangt diese Mischung über den Auslass 4 wiederum zu einem Pufferbehälter 12 und von dort in eine letzte Dispergiervorrichtung 11, die mit zwei parallelen Pufferbehältern 12 verbunden ist.

Gegenüber Fig. 3 weist also die Vorrichtung 1 gemäß Fig. 1 eine dritte Misch- und Dispergiervorrichtung 14 auf.

Auch im Ausführungsbeispiel der Vorrichtung 1 gemäß Fig. 2 ist ein Einlass 6 zu einer Flüssigkeitszufuhr 5 vorgesehen, die eine Abzweigung 15 aufweist. Der eine Leitungsstrang 16 dieser Flüssigkeitszufuhr 5 führt zu einer ersten Misch- und Dispergiervorrichtung 2, die über eine Dosiervorrichtung 8 und eine Leitung 7 mit dem Binder versorgt wird, den sie dann mit der Flüssigkeit vermischt, während der zweite Strang 17 der Flüssigkeitszufuhr zu der zweiten Misch- und Dispergiervorrichtung 3 führt, die über die Dosier- und Fördervorrichtung 9 und die Leitung 7 mit dem leitenden Material beschickt wird.

In diesem Ausführungsbeispiel gemäß Figur 2 wird also die Flüssigkeit aufgeteilt und zunächst in der ersten Misch- und Dispergiervorrichtung 2 mit Binder und in der zweiten Mischund Dispergiervorrichtung 3 mit leitendem Material durchmischt, wonach die Auslässe 4 der beiden Misch- und Dispergiervorrichtungen 2 und 3 über Leitungen und Pufferbehälter 12 wieder an einer Mündung 18 zusammengeführt werden, von wo sie in die dritte Misch- und Dispergiervorrichtung 14 gelangen, die gleichzeitig über eine Leitung 7 mit der Dosier- und Fördervorrichtung 10 für das aktive Material verbunden ist.

Gegenüber Fig. 1 ist also im Ausführungsbeispiel nach Fig. 2 die Anordnung der ersten und der zweiten Misch- Dispergiervorrichtung 2 und 3 abgewandelt und diese Misch- und Dispergiervorrichtungen 2 und 3 sind parallel zueinander jeweils mit einem Teil der Flüssigkeit wirksam, so dass dann zwei unterschiedliche Mischungen aus diesen Misch- und Dispergiervorrichtungen 2 und 3 zusammengeführt und gemeinsam in der dritten Misch- und Dispergiervorrichtung 14 miteinander und mit dem aktiven Material vermischt werden.

Hinter der dritten Misch- und Dispergiervorrichtung 14 ist wiederum eine letzte Dispergiervorrichtung 11 und davor ein Pufferbehälter 12 vorgesehen.

In allen Ausführungsbeispielen sind die Puffer- und Speicherbehälter 12 gleichzeitig zum Entgasen eingerichtet, wie es durch die Auslässe 19 für Gas an diesen Behältern 12 in den Zeichnungen angedeutet ist.

Auch im Ausführungsbeispiel nach Fig. 2 sind hinter der letzten Dispergiervorrichtung 11 zwei parallel zueinander angeordnete und beschickbare sowie entleerbare Puffer- und Speicherbehälter 12 vorgesehen.

Mit der in den einzelnen Ausführungsbeispielen jeweils etwas unterschiedlich gestalteten Vorrichtung 1 kann also eine Mischung zum Beschichten von Elektroden von Batterien oder Akkumulatoren oder von Brennstoffzellen kontinuierlich hergestellt werden, wobei Flüssigkeit, ein Binder, leitendes Material und Aktivmaterial vermischt werden, wobei zunächst der Binder mit der Flüssigkeit kontinuierlich vermischt und darin gelöst wird und der so gebildeten Lösung dann im weiteren Verlauf der Förderung durch die Vorrichtung 1 der so gebildeten Lösung die weiteren Bestandteile der herzustellenden Mischung jeweils kontinuierlich zugemischt und mit ihr dispergiert werden.

In allen Figuren erkennt man außerdem noch, dass die nach einem jeweiligen Puffer- oder Zwischenspeicherbehälter 12 weiterführende Leitung eine Abzweigung 21 und eine Rückführleitung 20 vor die Misch- oder Dispergiervorrichtung zum Zurückführen der bereits dispergierten Mischung wieder in die selbe Misch- und/oder Dispergiervorrichtung aufweist, d.h. der kontinuierliche Verfahrensablauf kann gegebenenfalls unterbrochen werden, um an den einzelnen Misch- und Dispergierstufen eine Intensivierung der Vermischung durch eine Wiederholung über diese Rückführleitung 20 durchzuführen.

Die Vorrichtung 1 dient zum Herstellen einer Mischung zum Beschichten von Elektroden von Batterien oder Akkumulatoren oder Brennstoffzellen, die im Wesentlichen aus leitendem Material, aus Aktivmaterial und aus wenigstens einem Binder sowie aus Flüssigkeit besteht, mit welcher die festen Bestandteile vermischt werden. Dabei wird zunächst der Binder mit der Flüssigkeit kontinuierlich vermischt und darin gelöst wird. Der so kontinuierlich gebildeten Lösung können die weiteren Bestandteile kontinuierlich nacheinander und/oder zum Teil gleichzeitig zugemischt und insbesondere jeweils dispergiert werden, um kontinuierlich eine intensive homogene Mischung zu erhalten. Die Vorrichtung zur Herstellung einer solchen Mischung kann im Wesentlichen als Mischeinrichtung mit wenigstens zwei oder zweckmäßigerweise drei Mischvorrichtungen 2, 3 und 14 angesehen werden, wobei in Förderrichtung vor der ersten Misch- und Dispergiervorrichtung 2 der Zulauf 5 und der Einlass 6 für die Flüssigkeit angeordnet ist und die einzelnen Mischvorrichtungen so miteinander verbunden sind, dass die Mischvorgänge in ihrem Inneren und die Weiterbeförderung der jeweils gebildeten Mischung von einer Mischvorrichtung zur nächsten kontinuierlich ablaufen können.

## Patentansprüche

1. Verfahren zum Herstellen einer Mischung, mit welcher Elektroden von Batterien oder Akkumulatoren oder von Brennstoffzellen beschichtet werden, wobei leitendes Material, aktives Material und wenigstens ein Binder als feste Bestandteile in Pulver- oder Granulatform und Flüssigkeit vermischt werden, wobei zunächst der Binder mit der Flüssigkeit kontinuierlich vermischt und in der Flüssigkeit gelöst wird und dass die so kontinuierlich entstehende Lösung und Mischung kontinuierlich weiter befördert und ihr die weiteren Bestandteile der herzustellenden Mischung in in Förderrichtung folgenden Mischvorrichtungen jeweils kontinuierlich zugemischt werden, wobei die mehreren Verfahrensschritte kombiniert werden, sodass das gesamte Mischverfahren kontinuierlich abläuft, **dadurch gekennzeichnet, dass** nach wenigstens einem oder mehreren oder jedem kontinuierlichen Misch- und/oder Dispergiervorgang in einer Misch- und/oder Dispergiervorrichtung die Teilmischung und/oder die Vormischung in wenigstens einen Zwischenspeicher- oder Pufferbehälter (12) eingefüllt und von diesem erneut in die Misch- und/oder Dispergiervorrichtung oder in die nächste Mischvorrichtung überführt wird, und dass die dispergierte Mischung über eine Abzweigung (21) in einer nach einem jeweiligen Zwischenspeicherbehälter (12) angeordneten weiterführenden Leitung und eine Rückführleitung (20) wieder vor oder in die Misch- und/oder Dispergiervorrichtung zurückgeführt wird.

2. Verfahren nach Anspruch 1, **dadurch gekennzeichnet, dass** der den gelösten Binder enthaltenden Flüssigkeit kontinuierlich das leitende Material und/oder das aktive Material zugemischt werden.

3. Verfahren nach Anspruch 1 oder 2, **dadurch gekennzeichnet, dass** das leitende Material und das aktive Material der den Binder enthaltenden Flüssigkeitslösung kontinuierlich nacheinander zugemischt werden.

4. Verfahren nach einem der Ansprüche 1 bis 3, **dadurch gekennzeichnet, dass** das aktive Material und das leitende Material zusammengeführt und gemeinsam mit der den Binder enthaltenden Lösung vermischt werden.

5. Verfahren nach einem der Ansprüche 1 bis 4, **dadurch gekennzeichnet, dass** die für die Mischung erforderliche Flüssigkeit in wenigstens zwei Flüssigkeitsanteile aufgeteilt und der eine Flüssigkeitsanteil kontinuierlich mit dem Binder vermischt und dieser darin gelöst wird und dass der wenigstens zweite Flüssigkeitsanteil kontinuierlich mit leitendem Material und/oder mit aktivem Material kontinuierlich vermischt wird und dass die so gebildeten Teilmischungen kontinuierlich miteinander vermischt werden.

6. Verfahren nach einem der Ansprüche 1 bis 5, **dadurch gekennzeichnet, dass** die einzelnen Mischungen nach deren Vermischung jeweils dispergiert werden.

7. Verfahren nach einem der Ansprüche 1 bis 6, **dadurch gekennzeichnet, dass** nach dem Vermischen und/oder Dispergieren der den Binder enthaltenden Flüssigkeit mit dem aktiven Material und/oder mit dem leitenden Material die Gesamtmischung dispergiert wird.

8. Verfahren nach einem der Ansprüche 1 bis 7, **dadurch gekennzeichnet, dass** die für die Gesamtmischung benötigte Flüssigkeit in zwei Flüssigkeitsanteile aufgeteilt und die Vermischung der Flüssigkeitsanteile mit jeweils wenigstens einem festen Mischungsbestandteil gleichzeitig in separaten Mischvorrichtungen (2, 3) durchgeführt wird und dass die so gebildeten Teilmischungen kontinuierlich einer kontinuierlich arbeitenden Mischvorrichtung (14) zugeführt und mit wenigstens einem weiteren festen Mischungsbestandteil, insbesondere mit dem Aktivmaterial, vermischt werden.

9. Verfahren nach Anspruch 8, **dadurch gekennzeichnet, dass** die wenigstens zwei Teilmischungen zunächst in einer Mischvorrichtung miteinander vermischt und diese Vormischung einer weiteren kontinuierlich arbeitenden Mischvorrichtung (14) zugeführt werden, in der ein weiterer fester Mischungsbestandteil, insbesondere das Aktivmaterial, hinzugemischt wird.

10. Verfahren nach einem der Ansprüche 1 bis 9, **dadurch gekennzeichnet, dass** die alle Mischungsbestandteile vermischt umfassende Gesamtmischung nach der letzten gemeinsamen Vermischung in einem weiteren Verfahrensschritt zusätzlich dispergiert und dazu einer separaten Dispergiervorrichtung (11) zugeführt wird.

11. Verfahren nach einem der Ansprüche 1 bis 10, **dadurch gekennzeichnet, dass** zwischen der letzten Mischvorrichtung (11) für die Vermischung aller Bestandteile zu einer Gesamtmischung und einer separaten Dispergiervorrichtung die Gesamtmischung in einer Entgasungsstufe (19) entgast und/oder entlüftet, insbesondere von überlagertem Stickstoff befreit wird.

12. Vorrichtung (1) zum Herstellen einer Mischung zum Beschichten von Elektroden von Batterien oder Brenn-stoffzellen, bestehend aus leitendem Material, Aktivmaterial und Binder als festen Bestandteilen und aus Flüssigkeit mit einer Mischeinrichtung zum Vermischen von festen Bestandteilen miteinander und mit Flüssigkeit, insbesondere zur Durchführung des Verfahrens nach einem der Ansprüche 1 bis 11, wobei die Mischeinrichtung wenigstens zwei Mischvorrichtungen (2, 3) zum Vermischen von pulverigen und/oder körnigen Partikeln mit einer Flüssigkeit umfasst, welche Mischvorrichtungen (2, 3) jeweils einen Zuführschacht für die festen Bestandteile oder Feststoffe und wenigstens ein um eine vertikale Achse rotierendes Mischwerkzeug sowie eine Flüssigkeitszufuhr und koaxial zu dem Misch-werkzeug oder in Förderrichtung hinter der Mischvorrichtung eine Dispergiervorrichtung aufweist und dass die Auslässe (4) der Dispergiervorrichtungen mit einer weiteren Mischvorrichtung verbunden sind, so dass die in den einzelnen Misch- und Dispergiervorrichtungen (2, 3) kontinuierlich erstellten Teilmischungen kontinuierlich miteinander und/oder mit einem weiteren Feststoff vermischbar sind, **dadurch gekennzeichnet, dass** hinter dem Auslass wenigstens einer oder aller Dispergiervorrichtungen jeweils ein Zwischenspeicherbehälter (12) insbesondere mit einem darin angeordneten Mischwerkzeug (13) angeordnet ist, dessen Auslass mit dem Einlass einer nachfolgenden Mischvorrichtung verbunden ist, und dass die nach einem jeweiligen Zwischenspeicherbehälter (12) angeordnete weiterführende Leitung eine Abzweigung (21) und eine Rückführleitung (20) vor die Misch- und/oder Dispergiervorrichtung (2, 3, 11) zum Zurückführen der dispergierten Mischung wieder vor oder in die Misch- und/oder Dispergiervorrichtung aufweist.

13. Vorrichtung nach Anspruch 12, **dadurch gekennzeichnet, dass** die wenigstens zwei Misch- und Dispergiervorrichtungen (2, 3) hintereinander oder die erste und die zweite Mischvorrichtung parallel zueinander angeordnet sind und dass die Auslässe (4) der Misch- und/oder Dispergiervorrichtungen (2, 3) mit dem Einlass einer in Förderrichtung folgenden weiteren Mischvorrichtung verbunden sind.

14. Vorrichtung nach Anspruch 12 oder 13, **dadurch gekennzeichnet, dass** mit den Auslässen (4) der wenigstens zwei Misch- und/oder Dispergiervorrichtungen (2, 3) zur Bildung von Teilmischungen jeweils wenigstens ein Zwischenspeicherbehälter (12) angeordnet ist, dessen Auslass mit dem Einlass wenigstens einer dritten Misch- und/oder Dispergiervorrichtung (14) verbunden ist.

15. Vorrichtung nach Anspruch 14, **dadurch gekennzeichnet, dass** die dritte Misch- und/oder Dispergiervorrichtung nur eine Zuführung für die Vormischungen und eine Abführung für die daraus gebildete Zwischenmischung und/oder eine weitere Zuführung für weitere feste Bestandteile aufweist.

16. Vorrichtung nach Anspruch 14 oder 15, **dadurch gekennzeichnet, dass** mit dem Auslass (4) der wenigstens dritten Mischvorrichtung (14) der Einlass einer separaten Dispergiervorrichtung (11) verbunden ist.

17. Vorrichtung nach einem der Ansprüche 14 bis 16, **dadurch gekennzeichnet, dass** auf dem Weg zwischen dem Auslass der dritten Mischvorrichtung (14) und der separaten Dispergiervorrichtung (11) eine Entgasungsvorrichtung (19) angeordnet ist.

18. Vorrichtung nach einem der Ansprüche 14 bis 17, **dadurch gekennzeichnet, dass** hinter der dritten Misch- und/oder Dispergiervorrichtung (14) ein Puffer- oder Speicherbehälter (12) angeordnet ist.

19. Vorrichtung nach einem der Ansprüche 14 bis 18, **dadurch gekennzeichnet, dass** der Puffer- oder Speicherbehälter (12) hinter der dritten Mischvorrichtung vor der separaten Dispergiervorrichtung (11) angeordnet ist.

20. Vorrichtung nach einem der Ansprüche 12 bis 19, **dadurch gekennzeichnet, dass** in Förderrichtung am Ende der Mischeinrichtung wenigstens ein oder zwei, insbesondere parallel zueinander, angeordnete Puffer- oder Speicherbehälter (12) vorgesehen sind.

## Claims

1. Method for producing a mixture with which electrodes of batteries or accumulators or of fuel cells are coated, wherein conductive material, active material and at least one binder, as solid components in powder or granulate form, and liquid are mixed, wherein first the binder is continuously mixed with the liquid and dissolved in the liquid and that the mixture and solution thus continuously produced are continuously conveyed further and the further components of the mixture to be produced are each continuously admixed therewith in mixing devices which follow in the conveying direction, wherein the plurality of method steps are combined and so the whole mixing method proceeds continuously, **characterised in that** after at least one or a plurality or each continuous mixing and/or dispersing process in a mixing and/or dispersing device, the partial mixture and/or the pre-mix is poured into at least one intermediate storage or buffer container (12) and from there is again transferred into the mixing and/or dispersing device or into the next mixing device, and that the dispersed mixture is then returned upstream of or into the mixing and/or dispersing device via a branch (21) in an ongoing line, which is arranged downstream of a respective intermediate storage container (12), and a return line (20).

2. Method as claimed in claim 1, **characterised in that** the conductive material and/or the active material are continuously admixed with the liquid containing the dissolved binder.

3. Method as claimed in claim 1 or 2, **characterised in that** the conductive material and the active material are continuously admixed one after the other with the liquid solution containing the binder.

4. Method as claimed in any one of claims 1 to 3, **characterised in that** the active material and the conductive material are combined and are mixed jointly with the solution containing the binder.

5. Method as claimed in any one of claims 1 to 4, **characterised in that** the liquid required for the mixture is divided into at least two liquid portions and one liquid portion is continuously mixed with the binder and this binder is dissolved therein and that the at least second liquid portion is continuously mixed with conductive material and/or with active material and that the partial mixtures thus formed are continuously mixed with one another.

6. Method as claimed in any one of claims 1 to 5, **characterised in that** the individual mixtures are each dispersed after they have been mixed.

7. Method as claimed in any one of claims 1 to 6, **characterised in that** after mixing and/or dispersing the liquid containing the binder with the active material and/or with the conductive material, the whole mixture is dispersed.

8. Method as claimed in any one of claims 1 to 7, **characterised in that** the liquid required for the whole mixture is divided into two liquid portions and the mixing of the liquid portions with at least one solid mixture component in each case is carried out simultaneously in separate mixing devices (2, 3) and that the partial mixtures thus formed are continuously supplied to a continuously operating mixing device (14) and mixed with at least one further solid mixture component, in particular with the active material.

9. Method as claimed in claim 8, **characterised in that** the at least two partial mixtures are first mixed with one another in a mixing device and this pre-mix is supplied to a further continuously operating mixing device (14) in which a further solid mixture component, in particular the active material, is additionally mixed.

10. Method as claimed in any one of claims 1 to 9, **characterised in that** the whole mixture including all mixture components in mixed form is additionally dispersed, after the last combined mixing, in a further method step and is supplied for this purpose to a separate dispersing device (11).

11. Method as claimed in any one of claims 1 to 10, **characterised in that** between the last mixing device (11) for mixing all components to form a whole mixture and a separate dispersing device, the whole mixture is degassed and/or de-aerated, in particular freed of superposed nitrogen.

12. Device (1) for producing a mixture for coating electrodes of batteries or fuel cells, consisting of conductive material, active material and binder as solid components and of liquid, having a mixing apparatus for mixing solid components with one another and with liquid, in particular for carrying out the method as claimed in any one of claims 1 to 11, wherein the mixing apparatus includes at least two mixing devices (2, 3) for mixing powdered and/or granular particles with a liquid, which mixing devices (2, 3) each comprise a supply shaft for the solid components or solids and at least one mixing tool rotating about a vertical axis, and a liquid supply and, coaxial to the mixing tool or in the conveying direction behind the mixing device, a dispersing device, and that the outlets (4) of the dispersing devices are connected to a further mixing device and so the partial mixtures continuously produced in the individual mixing and dispersing devices (2, 3) can be continuously mixed with one another and/or with a further solid, **characterised in that** behind the outlet of at least one or all dispersing devices in each case an intermediate storage container (12) in particular with a mixing tool (13) disposed therein, is arranged, the outlet of which is connected to the inlet of a subsequent mixing device, and that the ongoing line arranged downstream of a respective intermediate storage container (12) comprises a branch (21) and a return line (20) upstream of the mixing and/or dispersing device (2, 3, 11) for then returning the dispersed mixture upstream of or into the mixing and/or dispersing device.

13. Device as claimed in claim 12, **characterised in that** the at least two mixing and dispersing devices (2, 3) are arranged one behind the other or the first and second mixing devices are arranged in parallel with one another and that the outlets (4) of the mixing and/or dispersing devices (2, 3) are connected to the inlet of a further mixing device following in the conveying direction.

14. Device as claimed in claim 12 or 13, **characterised in that** in each case at least one intermediate storage container (12) is arranged with the outlets (4) of the at least two mixing and/or dispersing devices (2, 3) to form partial mixtures, the outlet of which intermediate storage container is connected to the inlet of at least one third mixing and/or dispersing device (14).

15. Device as claimed in claim 14, **characterised in that** the third mixing and/or dispersing device has only one supply for the pre-mixes and one discharge for the intermediate mixture formed therefrom and/or a further supply for further solid components.

16. Device as claimed in claim 14 or 15, **characterised in that** the inlet of a separate dispersing device (11) is connected to the outlet (4) of the at least third mixing device (14).

17. Device as claimed in any one of claims 14 to 16, **characterised in that** a degassing device (19) is arranged on the path between the outlet of the third mixing device (14) and the separate dispersing device (11).

18. Device as claimed in any one of claims 14 to 17, **characterised in that** a buffer or storage container (12) is arranged behind the third mixing and/or dispersing device (14).

19. Device as claimed in any one of claims 14 to 18, **characterised in that** the buffer or storage container (12) is arranged behind the third mixing device upstream of the separate dispersing device (11).

20. Device as claimed in any one of claims 12 to 19, **characterised in that** at least one or two buffer or storage containers (12), which are in particular arranged in parallel with one another, are provided in the conveying direction at the end of the mixing apparatus.

## Revendications

1. Procédé de production d'un mélange avec lequel des électrodes de batteries ou d'accumulateurs ou de piles à combustible sont recouvertes, un matériau conducteur, un matériau actif et au moins un liant en tant que constituants solides sous forme pulvérulente ou granulaire et du liquide étant mélangés, le liant étant d'abord mélangé en continu avec le liquide et étant dissous dans le liquide et la solution et le mélange ainsi obtenus en continu étant encore transportés en continu et les autres constituants du mélange à produire étant mélangés à celui-ci à chaque fois en continu dans des dispositifs de mélange subséquents dans la direction de transport, les plusieurs étapes de procédé étant combinées de telle sorte que l'ensemble du procédé de mélange se déroule en continu, **caractérisé en ce qu'**après au moins une ou plusieurs ou chaque opération(s) de mélange et/ou de dispersion en continu dans un dispositif de mélange et/ou de dispersion, le mélange partiel et/ou le prémélange sont versés dans au moins un récipient de stockage intermédiaire ou un récipient tampon (12) et sont à nouveau transférés depuis celui-ci dans le dispositif de mélange et/ou de dispersion ou dans le dispositif de mélange suivant, et **en ce que** le mélange dispersé est ramené à nouveau avant ou dans le dispositif de mélange et/ou de dispersion par le biais d'une dérivation (21) dans une conduite de transport supplémentaire disposée après un récipient de stockage intermédiaire respectif (12) et par le biais d'une conduite de retour (20).

2. Procédé selon la revendication 1, **caractérisé en ce que** l'on mélange en continu le matériau conducteur et/ou le matériau actif au liquide contenant le liant dissous.

3. Procédé selon la revendication 1 ou 2, **caractérisé en ce que** le matériau conducteur et le matériau actif sont mélangés l'un après l'autre en continu à la solution de liquide contenant le liant.

4. Procédé selon l'une quelconque des revendications 1 à 3, **caractérisé en ce que** le matériau actif et le matériau conducteur sont réunis et sont mélangés ensemble à la solution contenant le liant.

5. Procédé selon l'une quelconque des revendications 1 à 4, **caractérisé en ce que** le liquide requis pour le mélange est divisé en au moins deux proportions de liquide et l'une des proportions de liquide est mélangée en continu au liant et celui-ci y est dissous, et **en ce que** l'au moins une deuxième proportion de liquide est mélangée en continu avec le matériau conducteur et/ou avec le matériau actif et **en ce que** les mélanges partiels ainsi formés sont mélangés en continu l'un avec l'autre.

6. Procédé selon l'une quelconque des revendications 1 à 5, **caractérisé en ce que** les mélanges individuels sont à chaque fois dispersés après leur mélange.

7. Procédé selon l'une quelconque des revendications 1 à 6, **caractérisé en ce qu'**après le mélange et/ou la dispersion du liquide contenant le liant avec le matériau actif et/ou avec le matériau conducteur, le mélange total est dispersé.

8. Procédé selon l'une quelconque des revendications 1 à 7, **caractérisé en ce que** le liquide requis pour le mélange total est divisé en deux proportions de liquide et le mélange des proportions de liquide est effectué avec à chaque fois au moins un constituant de mélange solide simultanément dans des dispositifs de mélange séparés (2, 3) et **en ce que** les mélanges partiels ainsi formés sont acheminés en continu à un dispositif de mélange fonctionnant en continu (14) et sont mélangés avec au moins un constituant de mélange solide supplémentaire, en particulier avec le matériau actif.

9. Procédé selon la revendication 8, **caractérisé en ce que** les au moins deux mélanges partiels sont d'abord mélangés l'un à l'autre dans un dispositif de mélange et ce prémélange est acheminé à un dispositif de mélange supplémentaire (14) fonctionnant en continu dans lequel est ajouté en mélange un constituant de mélange solide supplémentaire, en particulier le matériau actif.

10. Procédé selon l'une quelconque des revendications 1 à 9, **caractérisé en ce que** le mélange total comprenant tous les constituants de mélange mélangés, après le dernier mélange conjoint, est dispersé en outre dans une étape de procédé supplémentaire et est à cet effet acheminé à un dispositif de dispersion séparé (11).

11. Procédé selon l'une quelconque des revendications 1 à 10, **caractérisé en ce qu'**entre le dernier dispositif de mélange (11) pour le mélange de tous les constituants pour former un mélange total et un dispositif de dispersion séparé, le mélange total est dégazé et/ou désaéré dans une étape de dégazage (19), en particulier est débarrassé de l'azote superposé.

12. Dispositif (1) pour produire un mélange pour recouvrir des électrodes de batteries ou de piles à combustible, constitué d'un matériau conducteur, d'un matériau actif et d'un liant en tant que constituants solides et de liquide, avec un système de mélange pour le mélange des constituants solides les uns avec les autres et avec le liquide, en particulier pour mettre en oeuvre le procédé selon l'une quelconque des revendications 1 à 11, dans lequel le système de mélange comprend au moins deux dispositifs de mélange (2, 3) pour le mélange de particules pulvérulentes et/ou granulaires avec un liquide, lesquels dispositifs de mélange (2, 3) présentent à chaque fois un conduit d'amenée pour les constituants solides ou les matières solides et au moins un outil de mélange tournant autour d'un axe vertical ainsi qu'une alimentation en liquide et, coaxialement à l'outil de mélange ou dans la direction de transport derrière le dispositif de mélange, un dispositif de dispersion, et les sorties (4) des dispositifs de dispersion étant connectées à un dispositif de mélange supplémentaire de sorte que les mélanges partiels créés en continu dans les dispositifs de mélange et de dispersion individuels (2, 3) puissent être mélangés en continu les uns avec les autres et/ou avec une matière solide supplémentaire, **caractérisé en ce que** derrière la sortie d'au moins un ou de tous les dispositifs de dispersion est disposé à chaque fois un récipient de stockage intermédiaire (12) notamment avec un outil de mélange (13) disposé dans celui-ci, dont la sortie est connectée à l'entrée d'un dispositif de mélange suivant, et **en ce que** la conduite de transport supplémentaire disposée après un récipient de stockage intermédiaire respectif (12) présente une dérivation (21) et une conduite de retour (20) avant le dispositif de mélange et/ou de dispersion (2, 3, 11) pour ramener le mélange dispersé à nouveau avant ou dans le dispositif de mélange et/ou de dispersion.

13. Dispositif selon la revendication 12, **caractérisé en ce que** les au moins deux dispositifs de mélange et de dispersion (2, 3) sont disposés les uns derrière les autres ou le premier et le deuxième dispositif de mélange sont disposés parallèlement l'un à l'autre et **en ce que** les sorties (4) des dispositifs de mélange et/ou de dispersion (2, 3) sont connectées à l'entrée d'un dispositif de mélange supplémentaire subséquent dans la direction de transport.

14. Dispositif selon la revendication 12 ou 13, **caractérisé en ce qu'**avec les sorties (4) des au moins deux dispositifs de mélange et/ou de dispersion (2, 3) pour former des mélanges partiels, à chaque fois au moins un récipient de stockage intermédiaire (12) est prévu, dont la sortie est connectée à l'entrée d'au moins un troisième dispositif de mélange et/ou de dispersion (14).

15. Dispositif selon la revendication 14, **caractérisé en ce que** le troisième dispositif de mélange et/ou de dispersion présente seulement une alimentation pour les prémélanges et une évacuation pour le mélange intermédiaire formé à partir de ceux-ci et/ou une alimentation supplémentaire pour d'autres constituants solides.

16. Dispositif selon la revendication 14 ou 15, **caractérisé en ce qu'**à la sortie (4) de l'au moins un troisième dispositif de mélange (14) est connectée l'entrée d'un dispositif de dispersion séparé (11).

17. Dispositif selon l'une quelconque des revendications 14 à 16, **caractérisé en ce que** sur le trajet entre la sortie du troisième dispositif de mélange (14) et le dispositif de dispersion séparé (11) est disposé un dispositif de dégazage (19).

18. Dispositif selon l'une quelconque des revendications 14 à 17, **caractérisé en ce que** derrière le troisième dispositif de mélange et/ou de dispersion (14) est disposé un récipient tampon ou de stockage (12).

19. Dispositif selon l'une quelconque des revendications 14 à 18, **caractérisé en ce que** le récipient tampon ou de stockage (12) est disposé derrière le troisième dispositif de mélange avant le dispositif de dispersion séparé (11).

20. Dispositif selon l'une quelconque des revendications 12 à 19, **caractérisé en ce que** dans la direction de transport à l'extrémité du système de mélange sont prévus au moins un ou deux récipients tampon ou de stockage (12), notamment disposés parallèlement l'un à l'autre.
